# EUROPÄISCHE PATENTANMELDUNG

(11) **EP 4 455 173 A1**
(43) Veröffentlichungstag der Anmeldung: **30.10.2024**
(21) Anmeldenummer: 24170166.3
(22) Anmeldetag: 15.04.2024
(51) Int. Cl.: C08F 220/18, C08F 220/28, C08J 9/06, C08J 9/14, C08L 61/06

(54) **SCHAUMSTABILISATOREN FÜR PHENOLSCHAUM**

(30) Priorität: 24.04.2023 EP 23169356
(71) Anmelder: Evonik Operations GmbH, 45128 Essen (DE)
(72) Erfinder: Suchan, Michael, 45894 Gelsenkirchen (DE); Otto, Sarah, 45128 Essen (DE); Ferenz, Michael, 45147 Essen (DE)
(74) Vertreter: Evonik Patent Association

(57) **Zusammenfassung**

Die Erfindung betrifft eine Zusammensetzung zur Herstellung von Phenolschaum, umfassend mindestens ein Phenolharz, mindestens ein Treibmittel, mindestens einen Katalysator, dadurch gekennzeichnet, dass sie mindestens ein Acrylat- und/oder Methacrylat-Copolymer als Schaumstabilisator enthält.

## Beschreibung

Die vorliegende Erfindung liegt auf dem Gebiet der Phenolschäume. Insbesondere betrifft sie eine Zusammensetzung zur Herstellung von Phenolschaum, Verfahren zur Herstellung von Phenolschaum, erfindungsgemäß hergestellten Phenolschaum sowie dessen Verwendung. Unter Phenolschaum wird im Rahmen der vorliegenden Erfindung insbesondere ein Schaumstoff erhältlich durch Reaktion eines Phenolharzes mit einer Säure als Katalysator unter Zusatz eines Treibmittels und eines Schaumstabilisators verstanden. Phenolschäume sind dem Fachmann bekannt und beispielsweise in EP 3830174 A1, DE 602004006376 T2, EP 2898005 A1, EP 1922357 A1, WO 2022043561 A1, EP 4073155 A1, AU 2021238847 A1 oder WO 2006114777 A1 beschrieben. Phenolschäume werden synonym auch als Phenolharzschäume bezeichnet. Das gilt auch für die vorliegende Erfindung.

Bei der Herstellung von Phenolschaum können in der Regel zellstabilisierende bzw. schaumstabilisierende Additive eingesetzt werden, welche für eine feinzellige, gleichmäßige und störungsarme Schaumstruktur sorgen sollen und damit die Gebrauchseigenschaften, insbesondere zum Beispiel das thermische Isolationsvermögen, des Schaumes im wesentlichen Maße positiv beeinflussen. Gewöhnlich können hierfür Schaumstabilisatoren eingesetzt werden, wie z.B. Schaumstabilisatoren auf Basis ethoxylierter Pflanzenöle, wie z.B. Rizinusöl, wie z.B. in EP 3830174 A1 beschrieben. Als besonders effektiv hat sich der Einsatz von Polyether-modifizierten Siloxanen (PES), wie z.B. in WO 2022043561 A1 beschrieben, herausgestellt, um die Gebrauchseigenschaften weiter zu verbessern. Insbesondere die Kombination aus ethoxylierten Pflanzenölen und Polyether-modifizierten Siloxanen führt zu hervorragenden Gebrauchseigenschaften. Diese Kombination stellt daher einen bei der Herstellung von Phenolschaum üblicherweise bevorzugten Typ der Schaumstabilisatoren dar.

Der Einsatz Polyether-modifizierter Siloxane als Schaumstabilisatoren in Gegenwart von Säuren als Katalysator kann zu einem Abbau der Polyether-modifizierten Siloxane und einer daraus folgenden Bildung zyklischer Siloxane, insbesondere Octamethylcyclotetrasiloxan (D4), Decamethylcyclopentasiloxan (D5) und Dodecamethylcyclohexasiloxan (D6), führen, welche sich negativ auf die Eigenschaften, insbesondere die Emissionen des Phenolschaums auswirken.

Vor diesem Hintergrund war die Aufgabe der vorliegenden Erfindung die Bereitstellung von Phenolschäumen, die über gleichartige Gebrauchseigenschaften, insbesondere thermische Isolationseigenschaften, wie die mit herkömmlichen Polyether-modifizierten Siloxanen hergestellten Phenolschäume verfügen, aber hinsichtlich der Emissionen im Zusammenhang mit der Bildung zyklischer Siloxane, keine oder eine geringere Bildung von D4, D5 und/oder D6 aufweisen.

Die Aufgabe wird gelöst vom Gegenstand der Erfindung. Der Gegenstand der Erfindung ist eine Zusammensetzung zur Herstellung von Phenolschaum, umfassend mindestens ein Phenolharz, mindestens ein Treibmittel, mindestens einen Katalysator, wobei die Zusammensetzung mindestens ein Acrylat- und/oder Methacrylat-Copolymer als Schaumstabilisator enthält.

Der erfindungsgemäße Gegenstand geht mit vielfältigen Vorteilen einher. So ermöglicht er die Bereitstellung von Phenolschäumen, welche die bekannten Anforderungen erfüllen. Insbesondere verfügen die Phenolschäume über sehr gute Isolationseigenschaften und weisen ein hervorragendes Langzeitverhalten sowie eine hohe Oberflächenqualität auf. Vorteilhafterweise wird dies ermöglicht, ohne die sonstigen Eigenschaften des Materials zu beeinträchtigen und ohne oder nur geringer Bildung zyklischer Siloxane, insbesondere D4, D5 und/oder D6. Es werden überdies besonders feinzellige, gleichmäßige und störungsarme Schaumstrukturen ermöglicht. Die Erfindung ermöglicht grundsätzlich eine Siloxan-freie Schaumstabilisierung, d.h. sie ermöglicht den vollständigen Verzicht Siloxan-basierter Additive, wie z.B. den bekannten Polyether-modifizierten Siloxanen. Zudem erlaubt sie den gemeinsamen Einsatz mit den aus dem Stand der Technik bekannten alkoxylierten Pflanzenölen.

Eine besonders bevorzugte Ausführungsform der Erfindung liegt dann vor, wenn die erfindungsgemäße Zusammensetzung sich dadurch auszeichnet, dass das mindestens eine Acrylat- und/oder Methacrylat-Copolymer mindestens ein Co-Monomer des Typs H₂C=CR¹-COOR² und mindestens ein Co-Monomer des Typs H₂C=CR¹-COOR³ enthält, wobei
- R¹ =: jeweils unabhängig voneinander -H oder -CH₃, wobei innerhalb eines Copolymers verschiedene Co-Monomere mit untereinander verschiedenen Substituenten R¹ vorliegen können,
- R² =: jeweils unabhängig voneinander gleiche oder verschiedene Reste aus der Gruppe gesättigter oder ungesättigter, linearer, cyclischer oder verzweigter, aliphatischer oder aromatischer Kohlenwasserstoffe mit 1 bis 25 C-Atomen, vorzugsweise Methyl, Ethyl, n-Butyl, i-Butyl, t-Butyl, 2-Ethylhexyl, Isodecyl, Cyclohexyl, Benzyl, Phenyl, Isobornyl oder Allyl,
- R³ =: jeweils unabhängig voneinander gleiche oder verschiedene Polyether-Reste der allgemeinen durchschnittlichen Zusammensetzung nach Formel (1), 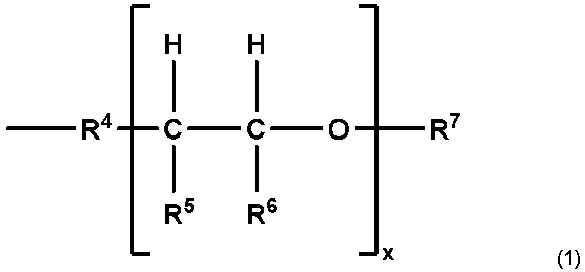
wobei
- x =: 1 bis 500, vorzugsweise 1 bis 250, insbesondere 3 bis 80,
- R⁴ =: jeweils unabhängig voneinander gleiche oder verschiedene Reste -CH₂-O-, -CH₂-CH₂-O-, -CH₂-CH₂-CH₂-O-, -CH₂-CH₂-CH₂-CH₂-O- oder -CH₂-CH₂-CH₂-CH₂-CH₂-O-, wobei R⁴ auch entfallen kann,
- R⁵ =: jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl, wobei innerhalb eines Restes R³ verschiedene Substituenten R⁵ in beliebiger Reihenfolge oder Sequenz vorliegen können,
- R⁶ =: jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl, wobei innerhalb eines Restes R³ verschiedene Substituenten R⁶ in beliebiger Reihenfolge oder Sequenz vorliegen können, wobei für eine Monomerwiederholeinheit bevorzugt beide Reste R⁵ und R⁶ = H oder einer der beiden Reste R⁵ und R⁶ = H und der andere Methyl,
- R⁷ =: jeweils unabhängig voneinander gleiche oder verschiedene Reste ausgewählt aus der Gruppe bestehend aus: R⁸ C(O)R⁸, -CH₂-CH(OH)-CH₂OH und -CH₂-C(CH₂OH)₂-CH₂-CH₃, wobei Methyl, Butyl, H oder C(O)Me bevorzugt sind, wobei innerhalb eines Copolymers verschiedene Co-Monomere mit untereinander verschiedenen Substituenten R⁷ vorliegen können,
- R⁸ =: jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder H.

Besonders bevorzugte Beispiele für im Sinne der Erfindung einsetzbare Acrylat- und/oder MethacrylatMonomere, jedoch nicht darauf eingeschränkt, sind Methyl(meth)acrylat, Ethyl(meth)acrylat, Propyl-(meth)acrylat, Isopropyl(meth)acrylat, Butyl(meth)acrylat, Isobutyl(meth)acrylat, Hexyl(meth)acrylat, Ethylhexyl(meth)acrylat, Isodecyl(meth)acrylat, Cyclohexyl(meth)acrylat, Tetrahydrofurfuryl(meth)acrylat, Isobornyl(meth)acrylat, Benzyl(meth)acrylat, Phenyl(meth)acrylat, Phenylethyl(meth)acrylat), 3,3,5-Tri-methylcyclohexyl(meth)acrylat, Hydroxyalkyl(meth)acrylate, wie z.B. 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat; Glycoldimethacrylate, wie z.B. 1,4-Butandiolmethacrylat, 2-Butoxyethylmethacrylat, 2-Ethoxyethoxymethylmethacrylat, 2-Ethoxyethylmethacrylat; Methacrylate von Etheralkoholen, wie z.B. Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat und/oder ethoxylierte oder propoxylierte (Meth)acrylate, die bevorzugt 1 bis 20, insbesondere 2 bis 8 Ethoxygruppen oder Propoxygruppen aufweisen.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Außerdem sind Verfahren zur Herstellung einsetzbarer Acrylat- und/oder Methacrylat-Copolymere dem Fachmann aus dem Stand der Technik bekannt. Diese sind beispielsweise in EP 1070730 A2 oder US 9349500 B2 beschrieben.

Eine weitere besonders bevorzugte Ausführungsform der Erfindung liegt dann vor, wenn sich die erfindungsgemäße Zusammensetzung dadurch auszeichnet, dass das mindestens eine Treibmittel ausgewählt ist aus der Gruppe bestehend aus
- Kohlenwasserstoffen mit 3, 4 oder 5 Kohlenstoff-Atomen, bevorzugt cyclo-, iso- und/oder n-Pentan und
- halogenierten Kohlenwasserstoffen mit 3, 4 oder 5 Kohlenstoff-Atomen, bevorzugt Isopropylchlorid, Hydrofluoroolefine und/oder Hydrohaloolefine, bevorzugt 1234ze, 1234yf, 1224yd, 1233zd(E) und/oder 1336mzz.

Wenn das mindestens eine Acrylat- und/oder Methacrylat-Copolymer ein mittels Gelpermeationschromatographie nach DIN 55672-1:2016-03 (Eluent: THF; Standard: PMMA) ermitteltes zahlengemitteltes Molekulargewicht Mn im Bereich von 500 bis 100.000 g/mol, besonders bevorzugt 1.000 bis 40.000 g /mol, insbesondere 1.000 bis 25.000 g/mol aufweist, so liegt wiederum eine weitere besonders bevorzugte Ausführungsform der Erfindung vor.

Gemäß einer weiteren besonders bevorzugten Ausführungsform der Erfindung ist das mindestens eine Acrylat- und/oder Methacrylat-Copolymer in einer Gesamtmenge von 0,1 bis 15 Gewichtsteile, vorzugsweise 0,5 bis 10 Gewichtsteile, besonders bevorzugt 0,5 bis 8 Gewichtsteile bezogen auf 100 Gewichtsteile des gesamt eingesetzten Phenolharzes, in der erfindungsgemäßen Zusammensetzung enthalten.

Vorzugsweise kann die erfindungsgemäße Zusammensetzung zusätzlich mindestens einen Si-haltigen Schaumstabilisator enthalten, bevorzugt in einer Gesamtmenge von weniger als 50 Gew.-%, weiter bevorzugt weniger als 25 Gew.-%, noch weiter bevorzugt weniger als 10 Gew.-%, bezogen auf die Gesamtmenge aller enthaltenen Schaumstabilisatoren.

Gemäß einer weiteren bevorzugten Ausführungsform der Erfindung enthält die die erfindungsgemäße Zusammensetzung keinen Si-haltigen Schaumstabilisator.

Gemäß einer weiteren bevorzugten Ausführungsform der Erfindung sind in der erfindungsgemäßen Zusammensetzung zusätzlich mindestens ein silizium-freies Tensid und/oder silizium-freier Schaumstabilisator, welche jeweils keine Acrylat- und/oder Methacrylat-Copolymere sind, in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten.

Wenn eine erfindungsgemäße Zusammensetzung zusätzlich mindestens ein alkoxyliertes, bevorzugt ethoxyliertes, Pflanzenöl, insbesondere Rizinusöl in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthält, dann entspricht das einer weiteren bevorzugten Ausführungsform der Erfindung.

Als Initiatoren können zur Herstellung erfindungsgemäß einsetzbarer Acrylat- und/oder Methacrylat-Copolymere prinzipiell unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. In manchen Fällen kann es auch vorteilhaft sein, Mischungen verschiedener Initiatoren zu verwenden, beispielsweise Mischungen aus Wasserstoffperoxid und Natrium- oder Kaliumperoxodisulfat. Mögliche organische Peroxide sind beispielsweise Acetylacetonperoxid, Methylethylketonperoxid, tert.-Butylhydroperoxid, Cumolhydroperoxid, tert.-Amyl-perpivalat, tert.-Butylperpivalat, tert.-Butylperneohexanoat, tert.-Butylperisobutyrat, tert.-Butyl-peroxy-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butyl-per-3,5,5-trimethylhexanoat, Acetylcyclohexylsulfonylperoxid, Dilaurylperoxid, und/oder tert.-Amyl-peroxy-2-ethylhexanoat. Weitere mögliche Initiatoren sind Azoverbindungen, z.B. 2,2'-Azobisisobutyronitril, 2,2'-Azobis(2,4-dimethylvaleronitril) und/oder 2,2'-Azobis(4-methoxy-2,4-dimethyl-valeronitril).

Überraschenderweise konnte im Rahmen der vorliegenden Erfindung gefunden werden, dass, wenn erfindungsgemäß einsetzbare Acrylat- und/oder Methacrylat-Copolymere vorzugsweise mit tert.-Butyl-peroxy-2-ethylhexanoat (TBPEH) oder tert-Amyl-peroxy-2-ethylhexanoat (APO) oder einer Kombination aus TBPEH und APO als Initiator hergestellt werden, dann mit Blick auf die erfindungsgemäß angestrebten Eigenschaften noch bessere Ergebnisse erzielt werden können. Es entspricht daher einer besonders bevorzugten Ausführungsform der Erfindung, wenn das mindestens eine Acrylat- und/oder Methacrylat-Copolymer mit TBPEH (tert.-Butyl-peroxy-2-ethyl-hexanoat) und/oder APO (tert-Amyl-peroxy-2-ethylhexanoat) als Initiator hergestellt wurde.

Weiterhin entspricht es einer besonders bevorzugten Ausführungsform dieser Erfindung, wenn das mindestens eine Acrylat- und/oder Methacrylat-Copolymer einen Restmonomergehalt <1 Gew.-% aufweist, bezogen auf das insgesamt enthaltene Acrylat- und/oder Methacrylat-Copolymer. Der Restmonomergehalt kann über übliche Methoden bestimmt werden, insbesondere kann er über den Feststoffgehalt oder mittels GC oder HPLC bestimmt werden. Entsprechende Zusammensetzungen ermöglichen erfindungsgemäß besonders vorteilhafte Schäume.

Neben den erfindungsgemäß einzusetzenden mindestens einen Acrylat- und/oder Methacrylat-Copolymeren können prinzipiell alle nach dem Stand der Technik bekannten schaumstabilisierenden Komponenten zusätzlich zum Einsatz kommen.

Die erfindungsgemäße Zusammensetzung enthält mindestens einen Katalysator. Gemäß einer besonders bevorzugten Ausführungsform der Erfindung ist der mindestens eine Katalysator ausgewählt aus der Gruppe bestehend aus organischen und anorganischen Säuren, vorzugsweise ist der mindestens eine Katalysator ausgewählt aus der Gruppe bestehend aus Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und Phenolsulfonsäure.

Es entspricht einer weiteren besonders bevorzugten Ausführungsform der Erfindung, wenn der mindestens eine Katalysator in einer Gesamtmenge von 1 bis 30 Gewichtsteilen, vorzugsweise 1 bis 25 Gewichtsteilen, besonders bevorzugt 3 bis 20 Gewichtsteilen, bezogen auf 100 Gewichtsteile des gesamt eingesetzten Phenolharzes, in der erfindungsgemäßen Zusammensetzung enthalten ist.

Vorzugsweise kann das erfindungsgemäß einzusetzende mindestens eine Acrylat- und/oder Methacrylat-Copolymere in Substanz oder auch in einem Lösungsmittel zur Verwendung kommen. Hierbei können alle geeigneten Substanzen zum Einsatz kommen, die bei der Herstellung von Phenolschäumen verwendbar sind.

Eine besonders bevorzugte Phenolschaum-Formulierung im Sinne dieser Erfindung ergibt ein Raumgewicht von 5 bis 900 kg/m³ und hat vorzugweise die in Tabelle 1 genannte Zusammensetzung, die einer bevorzugten Ausführungsform der Erfindung entspricht:

**Tabelle 1: Zusammensetzung einer bevorzugten Phenolschaumformulierung**

| **Komponente** | **Gewichtsteile** |
|---|---|
| Phenolharz | 80 bis 120 |
| Treibmittel | >0 bis 50 |
| Katalysator | 1 bis 30 |
| Schaumstabilisator (erfindungsgemäßes Acrylat- und/oder Methacrylat-Copolymer) | >0 bis 15 |
| Optional weitere Additive (Flammschutzmittel etc.) | 0 bis 100 |

Ein weiterer Gegenstand der vorliegenden Erfindung ist ein Verfahren zur Herstellung von Phenolschaum, welches unter Einsatz einer Reaktionsmischung, enthaltend eine erfindungsgemäße Zusammensetzung wie zuvor beschrieben, insbesondere wie in einem der Ansprüche 1 bis 12 definiert, erfolgt.

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der vorliegenden Erfindung ist ein Phenolschaum, hergestellt gemäß des zuvor genannten erfindungsgemäßen Verfahrens, vorzugsweise unter Einsatz einer erfindungsgemäßen Zusammensetzung, insbesondere wie in einem der Ansprüche 1 bis 12 definiert.

Ein besonders bevorzugter Phenolschaum liegt vor, wenn der Phenolschaum eine Dichte nach ASTM D1622-2020 von 5 bis 500 kg/m³, bevorzugt 10 bis 200 kg/m³, insbesondere bevorzugt von 12 bis 100 kg/m³ aufweist. Dies entspricht einer besonders bevorzugten Ausführungsform der Erfindung.

Ein weiterer Gegenstand der Erfindung ist die Verwendung des erfindungsgemäßen Phenolschaums zur thermischen Isolation.

Nachfolgend werden besonders bevorzugte erfindungsgemäße Zusammensetzungen genauer beschrieben.

Eine besonders bevorzugte erfindungsgemäße Zusammensetzung enthält die folgenden Bestandteile:
- mindestens ein Phenolharz,
- mindestens ein Treibmittel,
- mindestens ein Katalysator,
- mindestens ein Acrylat- und/oder Methacrylat-Copolymer als Schaumstabilisator
- optional weitere Additive, etc.

Die Herstellung von Phenolschäumen (diese werden synonym auch als Phenolharzschäume bezeichnet; diese Begriffe sind im Rahmen der Erfindung gleichbedeutend) ist an sich bekannt. Für die Herstellung von Phenolschäumen werden eine oder mehrere Phenolharze, vorzugsweise eine oder mehrere sogenannte Resolharze, verwendet. Entsprechend einsetzbare Phenolharze, vorzugsweise Resolharze, sind an sich bekannt. Insbesondere können sie in bekannter Weise durch Kondensation von Phenol oder einer phenolbasierten Verbindung wie zum Beispiel Kresol, Xylenol, para-Alkylphenol, para-Phenylphenol, Resorcin oder dergleichen und einem Aldehyd wie zum Beispiel Formaldehyd, Furfural, Acetaldehyd oder dergleichen unter vorzugsweise basischen Bedingungen, zum Beispiel durch Einsatz einer katalytische Menge an Alkalihydroxiden, wie z.B. Natriumhydroxid, Kaliumhydroxid oder Calciumhydroxid oder einem aliphatischen Amin, wie z.B. Trimethylamin oder Triethylamin, bevorzugt mit einem Überschuss an Aldehyd hergestellt werden. Dies stellt den üblichen Weg zur Herstellung von Phenolharzen, vorzugsweise Resolharzen dar, wobei die Erfindung nicht nur auf die gerade zuvor aufgeführten Chemikalien beschränkt ist.

Das molare Verhältnis von Phenolgruppen zu Aldehydgruppen unterliegt dabei keiner Beschränkung. Bevorzugt liegt das Verhältnis in einem Bereich von 1:1 bis 1:3, besonders bevorzugt in einem Bereich von 1:1,5 bis 1:2,5. Vorzugsweise, aber nicht beschränkt darauf, hat das Phenolharz einen freien Aldehydgehalt von 0,1 Gew.% bis 0,5 Gew.%. Dieser kann mittels potentiometrischer Titration nach ISO 11402:2004 mit Hydroxylaminhydrochlorid bestimmt werden.

Bevorzugt einsetzbare Phenolharze, die bei der Schaumherstellung verwendet werden können, sind bei 25 °C und Normaldruck Flüssigkeiten, und zwar vorzugsweise mit Wasserkonzentrationen von etwa 1 bis 25 Gew.-%, bevorzugt 5 bis 20 Gew.-%, und verfügen über Methylolgruppen als reaktive Substituenten, wie beispielsweise in EP 0170357 B1 beschrieben. Sofern gewünscht, kann die Viskosität des Phenolharzes unter anderem durch den Wassergehalt eingestellt werden. So führen hohe Wassergehalte gewöhnlich zu einer niedrigeren Viskosität und erleichtern so die Handhabung des Harzes als auch das Mischen währen der Schaumherstellung.

Die Viskosität bevorzugt einsetzbarer Phenolharze bei 25 °C und Normaldruck liegt vorzugsweise in einem Bereich von 1000 bis 28000 mPa*s und kann durch die üblichen dem Fachmann bekannten Methoden wie z.B. mittels Brookfield Viskosimeter bestimmt werden. Grundsätzliches zur Herstellung und Zusammensetzung von Phenolharzen ist dem Stand der Technik entnehmbar und insbesondere z.B. in EP 3830174 A1, EP 2898005 A1, WO 2022043561 A1 oder EP 4073155 A1, beschrieben.

Treibmittel und deren Einsatz bei der Herstellung von Phenolschäumen sind dem Fachmann bekannt. Die Verwendung von einem oder mehreren Treibmitteln ist grundsätzlich abhängig von der Art des Systems und der Anwendung des erhaltenen Phenolschaums. Je nach Menge des verwendeten Treibmittels kann ein Schaum mit hoher oder niedriger Dichte hergestellt werden. So können Schäume mit Dichten von vorzugsweise 5 kg/m³ bis 900 kg/ m³, bevorzugt 5 bis 500 kg/ m³, besonders bevorzugt 10 bis 200 kg/m³, insbesondere 12 bis 100 kg/m³ nach ASTM D1622-20 hergestellt werden.

Als Treibmittel können vorzugsweise eine oder mehrere der entsprechenden Verbindungen mit passenden Siedepunkten, wie z.B. Kohlenwasserstoffe mit 3, 4 oder 5 Kohlenstoffatomen, bevorzugt cyclo-, iso- oder n-Pentan, halogenierte Kohlenwasserstoffe wie zum Beispiel chlorierte Kohlenwasserstoffe wie Dichlorethan, 1,2-Dichlorethen, n-Propylchlorid, Isopropylchlorid, Butylchlorid, Isobutylchlorid, Pentylchlorid, Isopentylchlorid, 1,1-Dichlorethen, Trichlorethen oder Chlorethen oder Fluorkohlenwasserstoffe (HFC), wie zum Beispiel HFC 245fa, HFC 134a oder HFC 365mfc, Hydrofluoroolefine (HFO) oder Hydrohaloolefine, bevorzugt 1234ze, 1234yf, 1224yd, 1233zd(E) oder 1336mzz sowie deren Mischungen eingesetzt werden.

Katalysatoren, die für die Herstellung von Phenolschäumen einsetzbar sind, sind dem Fachmann aus dem Stand der Technik bekannt und beispielsweise in EP 0170 357 A1 oder in DE 602004006376 T2 beschrieben. Hierbei kann vorzugsweise auf die üblichen aus dem Stand der Technik bekannten organischen und anorganischen Säuren zurückgegriffen werden. Es können eine oder mehrere Säuren eingesetzt werden. Besonders bevorzugt einsetzbar sind Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und/oder Phenolsulfonsäure. Insbesondere können als Katalysatoren Gemische mehrerer dieser Verbindungen eingesetzt werden. Die bevorzugte Einsatzmenge der Katalysatoren für eine vollständige Reaktion wird unter anderem durch den Wassergehalt des Phenolharzes und/oder wenn der Katalysator als wässrige Lösung vorliegt auch durch dessen Wassergehalt beeinflusst. Beispielsweise kann bei höherem Wassergehalt eine höhere Säurekonzentration erforderlich sein.

Phenolschaum kann auf bekannte Weise, also insbesondere durch Reaktion einer Mischung umfassend Phenolharz, Treibmittel, Schaumstabilisator und Katalysator gebildet werden. Bei Zugabe eines Katalysators zu einem Gemisch aus Phenolharz, Treibmittel und Schaumstabilisator kommt es zu einer exothermen Reaktion zwischen den Methylolgruppen und Phenol, was zur Bildung von Methylenbrücken und zur Vernetzung führt. Dabei wird durch die Kondensation Wasser freigesetzt. Die Art und Menge der eingesetzten Säure, die Eigenschaften des Treibmittels und die Struktur des Schaumstabilisators beeinflussen dabei die Exothermie der Reaktion und die Schaumbildung.

Schaumstabilisatoren und deren Einsatz bei der Herstellung von Phenolschäumen sind dem Fachmann, wie oben beschrieben, allgemein bekannt. Erfindungsgemäß wird mindestens ein Schaumstabilisator auf Basis eines Acrylat- und/oder Methacrylat-Copolymers eingesetzt. Daneben können auch zusätzliche Schaumstabilisatoren eingesetzt werden, die die Schaumherstellung unterstützen. Diese Verbindungen sind aus dem Stand der Technik hinreichend bekannt. So wird beispielsweise in EP 3830174 A1 der Einsatz von ethoxyliertem Rizinusöl beschrieben.

Als optionale Additive können eine oder mehrere der nach dem Stand der Technik bekannten Substanzen verwendet werden, die bei der Herstellung von Phenolschäumen üblicherweise Verwendung finden, wie zum Beispiel Viskositätserniedriger, Weichmacher, Härter, Flammschutzmittel, zellverfeinernde Additive, Füllstoffe, Farbstoffe, Pigmente und/oder Duftstoffe. Geeignete optionale Additive sind zum Beispiel in EP 3830174 A1, US 4444912 A sowie EP 1922357 A1 beschrieben.

Als optionale feste Füllstoffe können zum Beispiel Metallhydroxide, wie Aluminiumhydroxid, Magnesiumhydroxid, Metallcarbonate, wie Calciumcarbonat, Magensiumcarbonat, Bariumcarbonat oder Zinkcarbonat, Metalloxide, wie Aluminiumoxid oder Zinkoxid oder Metallpulver, wie Zink verwendet werden. Zur Verringerung der Viskosität des Phenolharzes können zum Beispiel Monoethylenglykol oder Polyesterpolyole optional eingesetzt werden. Als Härter können zum Beispiel Verbindungen mit Aminogruppen wie Harnstoff oder Dicyandiamid optional eingesetzt werden. Vorzugsweise wird Harnstoff eingesetzt. Diese können bei der Verschäumung als auch bereits bei der Herstellung des Phenolharzes optional eingesetzt werden.

Das erfindungsgemäße Verfahren zur Herstellung von Phenolschäumen kann nach allen bekannten Methoden durchgeführt werden. Diese sind dem Fachmann bekannt und z.B. in EP 3830174 A1 beschrieben.

Wenn aus dieser Beschreibung nichts anderes hervorgeht, dann kann jegliche bevorzugte oder besonders bevorzugte Ausführungsform der Erfindung mit einer oder mehreren der übrigen bevorzugten oder besonders bevorzugten Ausführungsformen der Erfindung kombiniert werden.

Die erfindungsgemäßen Gegenstände sind nachfolgend beispielhaft beschrieben, ohne dass die Erfindung, deren Anwendungsbreite sich aus der gesamten Beschreibung und den Ansprüchen ergibt, auf diese beispielhaften Ausführungsformen beschränkt sein soll. Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden Mittelwerte angegeben, so handelt es sich, wenn nicht anders angegeben, um Zahlenmittel. Werden Parameter angegeben, die durch Messung bestimmt wurden, so wurden die Messungen, wenn nicht anders angegeben, bei einer Temperatur von 23 °C und Normaldruck durchgeführt.

### Beispiele:

### Beispiel 1: Synthese der Copolymere A bis J

### Copolymer A:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 9,2 g TBPEH (tert.-Butyl-peroxy-2-ethylhexanoat), 56,18 g Isobutylmethacrylat (i-BMA), 67,29 g MPEG500-Methacrylat (MPEG500MA) und 2,21 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PMMA): Mw=5630 g/mol; Mn=2560 g/mol; PDI (Polydispersität)=2,2.

### Copolymer B:

In einem 500 mL-Vierhalskolben mit Rückflusskühler und N₂-Leitung, Säbelrührer (200 Upm) und Pt100-Digital-Innenthermometer wurden 30,09 g n-Butylacetat vorgelegt und das Ölbad auf 145 °C erhitzt. Eine Mischung aus 9,18 g TBPEH (tert.-Butyl-peroxy-2-ethylhexanoat), 76,75 g Isobutylmethacrylat (i-BMA), 46,58 g MPEG500-Methacrylat (MPEG500MA) und 2,21 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PS): Mw=7373 g/mol; Mn=3156 g/mol; PDI=2,3.

### Copolymer C:

In einem 500 mL-Vierhalskolben mit Rückflusskühler und N₂-Leitung, Säbelrührer (200 Upm) und Pt100-Digital-Innenthermometer wurden 30,15 g n-Butylacetat vorgelegt und das Ölbad auf 145 °C erhitzt. Eine Mischung aus 9,02 g TBPEH (tert.-Butyl-peroxy-2-ethylhexanoat), 53,77 g Isobutylmethacrylat (i-BMA), 70,92 g MPEG500-Methacrylat (MPEG500MA) und 1,15 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,12 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PS): Mw=11.290 g/mol; Mn=3536 g/mol; PDI=3,2.

### Copolymer D:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 9,2 g TBPEH, 54,69 g Isodecylmethacrylat (IDMA), 68,77 g MPEG500MA und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PMMA): Mw=5250 g/mol; Mn=2410 g/mol; PDI=2,2.

### Copolymer E:

In einem 500 mL-Vierhalskolben mit Rückflusskühler und N₂-Leitung, Säbelrührer (200 Upm) und Pt100-Digital-Innenthermometer wurden 30,08 g n-Butylacetat vorgelegt und das Ölbad auf 145 °C erhitzt. Eine Mischung aus 9,23 g TBPEH (tert.-Butyl-peroxy-2-ethylhexanoat), 76,93 g Isobutylmethacrylat (i-BMA), 46,54 g MPEG500-Methacrylat (MPEG500MA) und 2,25 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,14 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PS): Mw=6202 g/mol; Mn=2427 g/mol; PDI=2,6.

### Copolymer F:

In einem 500 mL-Vierhalskolben mit Rückflusskühler und N₂-Leitung, Säbelrührer (200 Upm) und Pt100-Digital-Innenthermometer wurden 29,85 g n-Butylacetat vorgelegt und das Ölbad auf 145 °C erhitzt. Eine Mischung aus 9,12 g TBPEH (tert.-Butyl-peroxy-2-ethylhexanoat), 52,38 g Isobutylmethacrylat (i-BMA), 68,67 g MPEG500-Methacrylat (MPEG500MA) und 4,45 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PS): Mw=5103 g/mol; Mn=2127 g/mol; PDI=2,4.

### Copolymer G:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 20,75 g BP-50-FT (Dibenzoylperoxid), 50,92 g i-BMA, 60,99 g MPEG500MA und 2,21 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,13 g BP-50-FT gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1:2016-03 (Eluent: THF; Standard: PMMA): Mw=6350 g/mol; Mn=4080 g/mol; PDI=1,6.

### Copolymer H:

In einem 1000 mL-Vierhalskolben mit Rückflusskühler und N₂-Leitung, Säbelrührer (100 Upm) und Pt100-Digital-Innenthermometer wurde eine Mischung aus 265,05 g Petroleumbenzin (bp 100-120 °C) und 265,05 g Toluol vorgelegt und das Ölbad auf 135 °C erhitzt. Eine Mischung aus 4,43 g BP-50-FT (Dibenzoylperoxid), 90,59 g C17,4MA (Stearyl-Methacrylat), 55,02 g MPEG350MA (MPEG350-Methacrylat) und 19,06 g i-BMA wurde über einen Zeitraum von 5 h mit einer Schlauchpumpe zudosiert. Nach Beendigung der Zudosierung wurden 0,40 g BP-50-FT zur Nachreaktion zugegeben und 2 h weitergerührt. Es wurde auf Raumtemperatur abgekühlt und der Ansatz über Nacht ohne Rührung im Kolben belassen. Das Ölbad wurde erneut auf 130 °C aufgeheizt, nochmals 0,40 g BP-50-FT zugegeben und 3 h gerührt.

Der Ansatz wurde am Rotationsverdampfer eingeengt und das Lösemittelgemisch komplett abgezogen. 150 g des lösemittelfreien Polymers wurden in 150 g n-Butylacetat gelöst.

GPC nach DIN 55672-1:2016-03 (Eluent: THF; Standard: PMMA): Mw=14900 g/mol; Mn=8610 g/mol; PDI=1,7.

### Copolymer I:

In einem 500 mL-Vierhalskolben, mit Rückflusskühler und N₂-Leitung, Tropftrichter, KPG-Rührer (200 Upm) und Pt100-Digital-Innenthermometer wurden 29,9 g n-Butylacetat vorgelegt und das Ölbad auf 145°C erhitzt. Eine Mischung aus 9,8 g APO (tert-Amyl-peroxy-2-ethylhexanoat), 56,0 g i-BMA, 67,1 g MPEG500MA und 2,2 g 2-Mercaptoethanol wurde über einen Zeitraum von 4 h zugetropft. Dabei wurde zunächst 1,5 h mit einer Tropfgeschwindigkeit von 1 Tropfen pro 4 sek. und anschließend weitere 2,5 h mit einer Tropfgeschwindigkeit von 1 Tropfen pro 2 sek. zugetropft und ie Mischung für weitere 30 min bei dieser Temperatur gerührt. Es wurde auf 80 °C abgekühlt und 0,14 g APO gelöst in 10 g n-Butylacetat wurden zur Nachreaktion zudosiert. Weitere 15 g i-Butylacetat wurden zugegeben und es wurde 30 min ohne Heizen weiter gerührt.

GPC nach DIN 55672-1:2016-03 (Eluent: THF; Standard: PMMA): Mw=8474 g/mol; Mn=2426 g/mol; PDI=3,5.

### Copolymer J:

In einem 550 mL-Vierhalskolben, mit Rückflusskühler und N₂-Leitung, Tropftrichter, KPG-Rührer (200 Upm) und Pt100-Digital-Innenthermometer wurden 29,9 g n-Butylacetat vorgelegt und das Ölbad auf 145 °C erhitzt. Eine Mischung aus 9,8 g APO (tert-Amyl-peroxy-2-ethylhexanoat), 56,0 g i-BMA, 67,1 g MPEG500MA und 2,2 g 2-Mercaptoethanol wurde kontinuierlich über einen Zeitraum von 4 h, mit einer Tropfgeschwindigkeit von 1 Tropfen pro 2 sek. zugetropft und die Mischung für weitere 30 min bei dieser Temperatur gerührt. Es wurde auf 80 °C abgekühlt und 0,14 g APO gelöst in 10 g n-Butylacetat wurden zur Nachreaktion zudosiert. Weitere 15 g i-Butylacetat wurden zugegeben und es wurde 30 min ohne Heizen weiter gerührt.

GPC nach DIN 55672-1:2016-03 (Eluent: THF; Standard: PMMA): Mw=6181 g/mol; Mn=2276 g/mol; PDI=2,7.

### Beispiel 2: Herstellung des Phenolschaums

Für den anwendungstechnischen Vergleich wurde die Formulierung in Tabelle 2 gewählt.

**Tabelle 2: Formulierung zur Herstellung von Phenolschaum**

| **Komponente** | **Gewichtsteile** |
|---|---|
| Phenolharz* | 100 |
| Schaumstabilisator | 4,5 |
| Cyclo- / Isopentan 85/15 | 10 |
| p-Toluolsulfonsäure 65% in Wasser | 18 |

| | |
|---|---|
| * Phenolharz Cellobond J6014L der Firma Bakelite | |

Die Durchführung der Vergleichsverschäumungen erfolgte im Handmischverfahren. Dazu wurden Phenolharz (Ansatzmenge 180 ± 5 g) und Schaumstabilisator in einen Becher eingewogen und mit einem Tellerrührer (6 cm Durchmesser) 30 s bei 20 °C und 500 rpm vermischt. Danach wurde das Treibmittel zugegeben, für 30 s bei 1500 rpm vermischt und anschließend auf 18 °C gekühlt. Anschließend wurde die Säure zugegeben und die Mischung bei 2000 rpm für 45 s verrührt und in eine auf 60 °C thermostatisierte Aluminiumform von 25 cm x 25 cm x 7 cm Größe überführt, welche mit Polyethylenfolie ausgekleidet war. Nach 1 h wurden die Schaumstoffe entformt und 18 h in einem auf 60 °C beheizten Ofen ausgehärtet.

Die Porenstruktur wurde subjektiv anhand einer Skala von 1 bis 10 beurteilt, wobei 10 einen (idealisierten) ungestörten, sehr feinen Schaum und 1 einen extrem stark gestörten, groben Schaum repräsentiert. Die Wärmeleitzahl (λ-Wert in mW/m K) wurde an 2,5 cm dicken Scheiben mit einem Gerät vom Typ Hesto Lambda Control, Modell HLC X206 bei einer mittleren Temperatur von 10°C entsprechend den Vorgaben der Norm EN12667:2001 gemessen. Zur Bestimmung der Alterung der Wärmeleitfähigkeit wurden die Probekörper für 7 Tage bei 70 °C gelagert und danach erneut vermessen. Die Dichte wurde entsprechend ASTM D1622-2020 bestimmt.

Die erfindungsgemäßen Schaumstabilisatoren wurden analog zum Einsatz der Polyether-modifizierten Siloxane als Einzelkomponenten als auch in Kombination mit einem alkoxylierten Rizinusöl untersucht. Für die Vergleichsbeispiele wurden TEGOSTAB^{®} B 84905 der Firma Evonik Operations GmbH als für Phenolschaum geeignetes Polyether-modifizertes Siloxan und TAGAT^{®} CH 40 als ethoxyliertes Rizinusöl der Firma Evonik Operations GmbH verwendet.

Die Ergebnisse sind in Tabelle 3 und 4 dargestellt.

**Tabelle 3: Eigenschaften der Phenolschäume**

| **Schaumstabilisator** | **Dichte in kg/m³** | **Initial λ in mW/mK** | **λ nach Alterung in mW/mK** | **Zellstruktur Oberfläche** | **Zellstruktur Innenstörung** |
|---|---|---|---|---|---|
| TAGAT^{®} CH 40 | 36,2 | 23,3 | 26,9 | 6,0 | 6,5 |
| TEGOSTAB^{®} B 84905 | 35,8 | 22,5 | 26,4 | 7,5 | 7,0 |
| Copolymer A | 35,6 | 22,1 | 25,3 | 7,0 | 7,0 |
| Copolymer B | 35,2 | 22,6 | 25,8 | 7,5 | 6,5 |
| Copolymer C | 36,7 | 22,8 | 26,0 | 7,0 | 7,5 |
| Copolymer D | 36,1 | 21,9 | 25,0 | 7,5 | 7,5 |
| Copolymer E | 36,9 | 23,0 | 26,3 | 6,5 | 6,5 |
| Copolymer F | 35,8 | 22,4 | 25,8 | 8,0 | 7,0 |
| Copolymer G | 37,8 | 23,8 | 27,1 | 5,5 | 6,5 |
| Copolymer H | 36,9 | 23,5 | 27,0 | 6,0 | 6,0 |
| Copolymer I | 34,9 | 22,1 | 25,4 | 7,0 | 7,0 |
| Copolymer J | 35,7 | 22,3 | 25,5 | 7,5 | 7,0 |

Die Ergebnisse zeigen, dass mit den Copolymeren A-F, sowie I und J Schaumqualitäten erzielt werden können, die auf dem gleichen Niveau oder leicht über dem von Polyether-modifizierten Siloxanen liegen. Copolymere G und H zeigen, verglichen mit Polyether-modifizierten Siloxanen, geringfügig schlechtere Schaumqualitäten. Diese liegen jedoch noch immer auf dem Niveau herkömmlicher alkoxylierter Pflanzenöle und ermöglichen damit ebenfalls die Herstellung gebrauchsfähiger Schäume ohne Polyether-modifizierte Siloxane. Alle anderen für den Gebrauch relevanten Schaumeigenschaften werden durch die erfindungsgemäßen Copolymere nicht oder nur unwesentlich beeinflusst.

**Tabelle 4: Eigenschaften der Phenolschäume**

| **Schaumstabilisator** | **Dichte in kg/m³** | **Initial λ in mW/mK** | **λ nach Alterung in mW/mK** | **Zellstruktur Oberfläche** | **Zellstruktur Innenstörung** |
|---|---|---|---|---|---|
| TAGAT^{®} CH 40 / TEGOSTAB^{®} B 84905 (3,5:1,0) | 35,2 | 22,1 | 25,5 | 7,0 | 7,5 |
| Copolymer A / TAGAT^{®} CH 40 (2,5:2,0) | 34,6 | 21,8 | 25,0 | 7,5 | 7,5 |
| Copolymer B / TAGAT^{®} CH 40 (2,5:2,0) | 35,0 | 22,4 | 25,4 | 7,0 | 7,0 |
| Copolymer C / TAGAT^{®} CH 40 (2,5:2,0) | 35,0 | 22,1 | 25,8 | 6,5 | 7,0 |
| Copolymer D / TAGAT^{®} CH 40 (2,5:2,0) | 36,1 | 22,0 | 24,8 | 7,5 | 7,5 |
| Copolymer E / TAGAT^{®} CH 40 (2,5:2,0) | 36,4 | 22,4 | 25,7 | 7,5 | 7,0 |
| Copolymer F / TAGAT^{®} CH 40 (2,5:2,0) | 35,4 | 21,8 | 24,6 | 7,5 | 7,5 |
| Copolymer G / TAGAT^{®} CH 40 (2,5:2,0) | 36,7 | 22,7 | 26,0 | 6,5 | 7,0 |
| Copolymer H / TAGAT^{®} CH 40 (2,5:2,0) | 37,0 | 22,7 | 26,7 | 6,5 | 7,5 |
| Copolymer I / TAGAT^{®} CH 40 (2,5:2,0) | 35,2 | 22,0 | 25,3 | 7,5 | 7,5 |
| Copolymer J / TAGAT^{®} CH 40 (2,5:2,0) | 35,5 | 22,3 | 25,2 | 7,5 | 7,5 |

Die Ergebnisse zeigen, dass mit allen Copolymeren in Kombination mit ethoxyliertem Rizinusöl Schaumqualitäten erzielt werden können, die auf dem gleichen Niveau oder leicht über dem von Polyether-modifizierten Siloxanen in Kombination mit ethoxyliertem Rizinusöl liegen. Alle anderen für den Gebrauch relevanten Schaumeigenschaften werden durch die erfindungsgemäßen Copolymere nicht oder nur unwesentlich beeinflusst.

## Patentansprüche

1. Zusammensetzung zur Herstellung von Phenolschaum, umfassend mindestens ein Phenolharz, mindestens ein Treibmittel, mindestens einen Katalysator, **dadurch gekennzeichnet, dass** sie mindestens ein Acrylat- und/oder Methacrylat-Copolymer als Schaumstabilisator enthält.

2. Zusammensetzung nach Anspruch 1, **dadurch gekennzeichnet, dass** das mindestens eine Acrylat- und/oder Methacrylat-Copolymer mindestens ein Co-Monomer des Typs H₂C=CR¹-COOR² und mindestens ein Co-Monomer des Typs H₂C=CR¹-COOR³ enthält, wobei
R¹ = jeweils unabhängig voneinander -H oder -CH₃, wobei innerhalb eines Copolymers verschiedene Co-Monomere mit untereinander verschiedenen Substituenten R¹ vorliegen können,
R² = jeweils unabhängig voneinander gleiche oder verschiedene Reste aus der Gruppe gesättigter oder ungesättigter, linearer, cyclischer oder verzweigter, aliphatischer oder aromatischer Kohlenwasserstoffe mit 1 bis 25 C-Atomen, vorzugsweise Methyl, Ethyl, n-Butyl, i-Butyl, t-Butyl, 2-Ethylhexyl, Isodecyl, Cyclohexyl, Benzyl, Phenyl, Isobornyl oder Allyl,
R³ = jeweils unabhängig voneinander gleiche oder verschiedene Polyether-Reste der allgemeinen durchschnittlichen Zusammensetzung nach Formel (1), 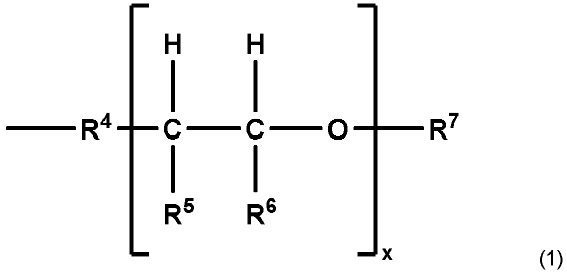
wobei
x = 1 bis 500, vorzugsweise 1 bis 250, insbesondere 3 bis 80,
R⁴ = jeweils unabhängig voneinander gleiche oder verschiedene Reste -CH₂-O-, -CH₂-CH₂-O-, -CH₂-CH₂-CH₂-O-, -CH₂-CH₂-CH₂-CH₂-O- oder -CH₂-CH₂-CH₂-CH₂-CH₂-O-, wobei R⁴ auch entfallen kann,
R⁵ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl, wobei innerhalb eines Restes R³ verschiedene Substituenten R⁵ in beliebiger Reihenfolge oder Sequenz vorliegen können,
R⁶ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl, wobei innerhalb eines Restes R³ verschiedene Substituenten R⁶ in beliebiger Reihenfolge oder Sequenz vorliegen können, wobei für eine Monomerwiederholeinheit bevorzugt beide Reste R⁵ und R⁶ = H oder einer der beiden Reste R⁵ und R⁶ = H und der andere Methyl,
R⁷ = jeweils unabhängig voneinander gleiche oder verschiedene Reste ausgewählt aus der Gruppe bestehend aus: R⁸ C(O)R⁸, -CH₂-CH(OH)-CH₂OH und -CH₂-C(CH₂OH)₂-CH₂-CH₃, wobei Methyl, Butyl, H oder C(O)Me bevorzugt sind, wobei innerhalb eines Copolymers verschiedene Co-Monomere mit untereinander verschiedenen Substituenten R⁷ vorliegen können,
R⁸ = jeweils unabhängig voneinander gleiche oder verschiedene Alkylreste mit 1 bis 16 Kohlenstoffatomen, gleiche oder verschiedene Arylreste mit 6 bis 16 Kohlenstoffatomen oder H.

3. Zusammensetzung nach einem der Ansprüche 1 oder 2, **dadurch gekennzeichnet, dass** das mindestens eine Treibmittel ausgewählt ist aus der Gruppe bestehend aus
- Kohlenwasserstoffen mit 3, 4 oder 5 Kohlenstoff-Atomen, bevorzugt cyclo-, iso- und/oder n-Pentan
und
- halogenierten Kohlenwasserstoffen mit 3, 4 oder 5 Kohlenstoff-Atomen, bevorzugt Isopropylchlorid, Hydrofluoroolefine und/oder Hydrohaloolefine, bevorzugt 1234ze, 1234yf, 1224yd, 1233zd(E) und/oder 1336mzz.

4. Zusammensetzung nach einem der Ansprüche 1 bis 3, **dadurch gekennzeichnet, dass** das mindestens eine Acrylat- und/oder Methacrylat-Copolymer ein mittels Gelpermeationschromatographie nach DIN 55672-1 :2016-03 (Eluent: THF; Standard: PMMA) ermitteltes zahlengemitteltes Molekulargewicht Mn im Bereich von 500 bis 100.000 g/mol, besonders bevorzugt 1.000 bis 40.000 g /mol, insbesondere 1.000 bis 25.000 g/mol aufweist.

5. Zusammensetzung nach einem der Ansprüche 1 bis 4, **dadurch gekennzeichnet, dass** das mindestens eine Acrylat- und/oder Methacrylat-Copolymer in einer Gesamtmenge von 0,1 bis 15 Gewichtsteile, vorzugsweise 0,5 bis 10 Gewichtsteile, besonders bevorzugt 0,5 bis 8 Gewichtsteile bezogen auf 100 Gewichtsteile des gesamt eingesetzten Phenolharzes, enthalten ist.

6. Zusammensetzung nach einem der Ansprüche 1 bis 5, **dadurch gekennzeichnet, dass** mindestens ein Si-haltiger Schaumstabilisator enthalten ist, vorzugsweise in einer Gesamtmenge von weniger als 50 Gew.-%, weiter bevorzugt weniger als 25 Gew.-%, noch weiter bevorzugt weniger als 10 Gew.-%, bezogen auf die Gesamtmenge aller enthaltenen Schaumstabilisatoren.

7. Zusammensetzung nach einem der Ansprüche 1 bis 6, **dadurch gekennzeichnet, dass** zusätzlich mindestens ein silizium-freies Tensid und/oder silizium-freier Schaumstabilisator, welche jeweils keine Acrylat- und/oder Methacrylat-Copolymere sind, in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten sind.

8. Zusammensetzung nach einem der Ansprüche 1 bis 7, **dadurch gekennzeichnet, dass** zusätzlich mindestens ein alkoxyliertes, bevorzugt ethoxyliertes, Pflanzenöl, insbesondere Rizinusöl in einer Gesamtmenge von 0,1 bis 15 Gewichtsteile, vorzugsweise 1 bis 10 Gewichtsteile, bezogen auf 100 Gewichtsteile des gesamt eingesetzten Phenolharzes, enthalten ist.

9. Zusammensetzung nach einem der Ansprüche 1 bis 8, **dadurch gekennzeichnet, dass** der mindestens eine Katalysator ausgewählt ist aus der Gruppe bestehend aus organischen und anorganischen Säuren, vorzugsweise ist der mindestens eine Katalysator ausgewählt aus der Gruppe bestehend aus Schwefelsäure, Phosphorsäure, Benzolsulfonsäure, Xylolsulfonsäure, para-Toluolsulfonsäure, Ethylbenzolsulfonsäure, Naphtolsulfonsäure, Cumolsulfonsäure und Phenolsulfonsäure.

10. Zusammensetzung nach einem der Ansprüche 1 bis 9, **dadurch gekennzeichnet, dass** der mindestens eine Katalysator in einer Gesamtmenge von 1 bis 30 Gewichtsteile, vorzugsweise 1 bis 25 Gewichtsteile, besonders bevorzugt 3 bis 20 Gewichtsteile, bezogen auf 100 Gewichtsteile des gesamt eingesetzten Phenolharzes, enthalten ist.

11. Zusammensetzung nach einem der Ansprüche 1 bis 10, **dadurch gekennzeichnet, dass** das mindestens eine Acrylat- und/oder Methacrylat-Copolymer mit TBPEH (tert.-Butyl-peroxy-2-ethylhexanoat) und/oder APO (tert-Amyl-peroxy-2-ethylhexanoat) als Initiator hergestellt wurde.

12. Zusammensetzung nach einem der Ansprüche 1 bis 11, **dadurch gekennzeichnet, dass** der Restmonomergehalt <1 Gew.-% bezogen auf das insgesamt enthaltene Acrylat- und/oder Methacrylat-Copolymer beträgt.

13. Verfahren zur Herstellung von Phenolschaum, **dadurch gekennzeichnet, dass** es unter Einsatz einer Reaktionsmischung, enthaltend eine Zusammensetzung wie in einem der Ansprüche 1 bis 12 definiert, erfolgt.

14. Phenolschaum, hergestellt gemäß dem Verfahren nach Anspruch 13.

15. Phenolschaum nach Anspruch 14, **dadurch gekennzeichnet, dass** der Phenolschaum eine Dichte nach ASTM D1622-2020 von 5 bis 500 kg/m³, bevorzugt 10 bis 200 kg/m³, insbesondere bevorzugt von 12 bis 100 kg/m³ aufweist.

16. Verwendung des Phenolschaums nach einem der Ansprüche 14 oder 15 zur thermischen Isolation.
